# EUROPÄISCHE PATENTANMELDUNG

(11) **EP 1 584 998 A1**
(43) Veröffentlichungstag der Anmeldung: **12.10.2005**
(21) Anmeldenummer: 05102116.0
(22) Anmeldetag: 17.03.2005
(51) Int. Cl.: G05B 19/042

(54) **Verfahren zur Projektierung einer busorientierten programmierbaren Elektroinstallation**

(30) Priorität: 05.04.2004 DE 102004016730
(71) Anmelder: SIEMENS AKTIENGESELLSCHAFT, 80333 München (DE)
(72) Erfinder: Hoch, Peter, 93055 Regensburg (DE)

(57) **Zusammenfassung**

Die Erfindung betrifft ein Verfahren zur Projektierung einer busorientierten programmierbaren Elektroinstallation sowie ein entsprechendes Computerprogramm. Um die Projektierung einer busorientierten programmierbaren Elektroinstallation zu erleichtern wird vorgeschlagen, Projektierungsdaten eines ersten Applikationsprogramms (10) in ein zweites Applikationsprogramm (18) zu übernehmen. Dadurch kann der manuelle Projektierungsaufwand drastisch gesenkt werden.

## Beschreibung

Die Erfindung betrifft ein Verfahren zur Projektierung einer busorientierten programmierbaren Elektroinstallation sowie ein entsprechendes Computerprogramm.

Elektroinstallationen in Gebäuden werden in immer größerem Umfang unter Verwendung von Bustechnik verwirklicht. Eines dieser Bussysteme ist der European Installation Bus (EIB), der zur Herstellung einer Verbindung zwischen den in dem Gebäude installierten Elektrogeräten, wie z.B. Licht, Jalousien, Ventilatoren, Heizung, Alarmanlage oder dergleichen sowie Bedienungselementen, wie z.B. Taster, Schalter, Dimmer oder dergleichen dient. Dieses Bussystem basiert darauf, dass jeder Busteilnehmer über einen eigenen Mikroprozessor verfügt und somit selbständig und unabhängig von einem zentralen Prozessor seine Daten verwaltet. Jedem Busteilnehmer ist hierzu ein Applikationsprogramm mit Kommunikationsobjekten und Parametern zugeordnet.

Bei der Inbetriebsetzung eines derartigen Bussystems müssen die Kommunikationsbeziehungen der Busteilnehmer projektiert werden. Im Falle des EIB kommt hierbei häufig die EIB Tool-Software (ETS) zum Einsatz. Hierbei handelt es sich um eine Software, die auf einem PC bzw. Laptop lauffähig ist, der über eine RS232-Schnittstelle mit dem Bus verbunden wird. Bei der ETS handelt es sich um ein datenbankbasiertes graphisches Werkzeug zur Projektierung einer busorientierten programmierbaren Elektroinstallation. In der ETS-Datenbank sind die Projektierungsdaten für jeden einzelnen Busteilnehmer bzw. jedes einzelne Applikationsprogramm getrennt voneinander gespeichert. Bei einer Änderung eines Applikationsprogramms muss dieses von Hand neu projektiert werden. Dies ist mit einem sehr hohen Aufwand verbunden.

Aufgabe der Erfindung ist es, die Projektierung einer busorientierten programmierbaren Elektroinstallation zu erleichtern. Diese Aufgabe wird durch ein Verfahren nach Anspruch 1 bzw. durch ein Computerprogramm nach Anspruch 6 gelöst.

Ein Kerngedanke der Erfindung ist es, Projektierungsdaten eines ersten Applikationsprogramms in ein zweites Applikationsprogramm zu übernehmen. Hierdurch ist es zum einen möglich, die Projektierungsdaten einer ersten Applikationsprogrammversion in eine zweite, insbesondere weiterentwickelte Applikationsprogrammversion zu portieren, ohne für diese zweite Applikationsprogrammversion die gesamte Projektierung erneut durchführen zu müssen.

Andererseits besteht durch die Erfindung die Möglichkeit, Projektierungsdaten eines ersten Applikationsprogrammtyps für die Projektierung eines zweiten Applikationsprogrammtyps zu verwenden. Dies ist insbesondere dann von Vorteil, wenn der zweite Applikationsprogrammtyp wesentliche Teile der Projektierungsstruktur des ersten Applikationsprogrammtyps enthalten soll.

Durch die Erfindung ist es möglich, den manuellen Projektierungsaufwand, der den Preis für ein busorientiertes programmierbares Elektroinstallationssystem um ein Vielfaches übersteigen kann, drastisch zu senken.

Vorteilhafte Ausführungsformen der Erfindung sind in den Unteransprüchen angegeben. Die vorliegende Erfindung wird nachfolgend anhand von Ausführungsbeispielen beschrieben, die mit Hilfe von Zeichnungen näher erläutert werden. Hierbei zeigen:

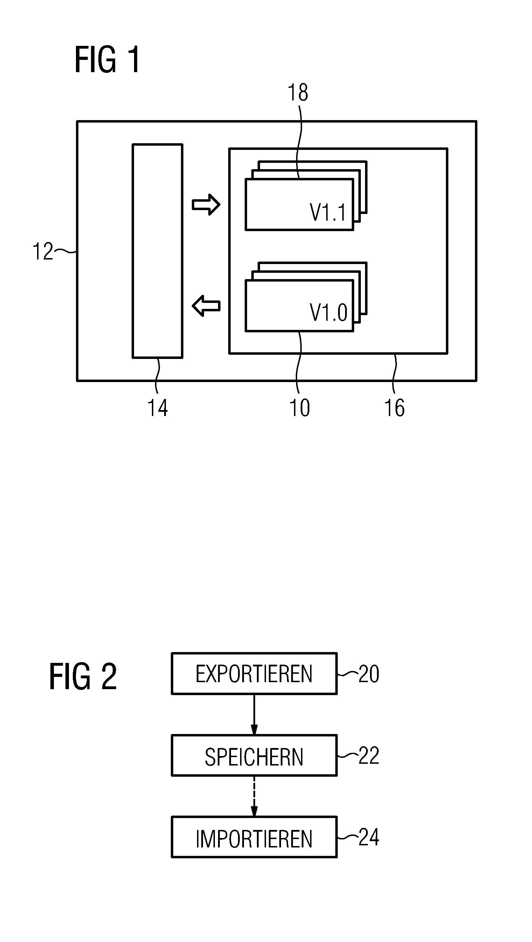

- FIG 1: eine stark vereinfachte schematische Darstellung einer ETS, wie sie zur Ausführung des erfindungsgemäßen Verfahrens verwendet werden kann und
- FIG 2: ein den Ablauf des erfindungsgemäßen Verfahrens illustrierendes Ablaufdiagramm.

Eine erste Ausführungsform der Erfindung betrifft die Projektierung eines sehr komplexen Applikationsprogramms 10. Die Standard-Funktionalität einer ETS 12 reicht in solchen Fällen oft nicht aus, so dass diese durch eine Softwareerweiterung 14, beispielsweise in Form eines Plug-in, erweitert wird. Bei der Softwareerweiterung 14 handelt es sich mit anderen Worten um eine applikationsprogrammspezifische Erweiterung der ETS 12. Erfindungsgemäß ist es vorgesehen, die Softwareerweiterung 14 um eine zusätzliche Funktionalität zu erweitern, die einen Export bzw. Import von Projektierungsdaten für dieses Applikationsprogramm 10 ermöglicht. Der Export bzw. Import der Projektierungsdaten erfolgt dabei in einem strukturierten Format, insbesondere in XML (Extensible Markup Language).

Anstelle von XML kann auch eine andere standardisierte Metasprache für die Projektierungsdaten-Übergabe verwendet werden wie beispielsweise SGML (Standard Generalized Markup Language), HTML (Hypertext Markup Language) oder dergleichen.

Die Projektierungsdaten werden dabei zunächst in einem ersten Schritt 20 exportiert. In dem XML-Export werden neben den Projektierungsdaten zusätzliche Informationen hinterlegt, die das Applikationsprogramm 10 eindeutig kennzeichnen. Bei diesen zusätzlichen Informationen handelt es sich beispielsweise um Angaben zum Hersteller des Applikationsprogramms, die Applikationsprogrammnummer bzw. die Applikationsprogrammversion.

Nach dem Auslesen der Projektierungsdaten werden diese in einem nächsten Schritt 22 in der ETS-Datenbank 16 gespeichert, von wo sie bei Bedarf in Schritt 24 in ein weiteres Applikationsprogramm 18 übertragen werden. Bei einer solchen Rückübertragung dienen die zusätzlich zu den Projektierungsdaten hinterlegten Informationen dazu, dass die übertragenen Projektierungsdaten auch von einer anderen Version des gleichen Applikationsprogramms eingelesen und ggf. konvertiert werden können. Hierdurch ist eine Datenübernahme zwischen unterschiedlichen Versionen ein und desselben Applikationsprogramms möglich. Im Beispiel werden die Projektierungsdaten von dem in Version 1.0 vorliegenden Applikationsprogramm 10 in die nächsthöhere Version 1.1 dieses Applikationsprogramms übergeben.

Der Export und Import der Projektierungsdaten in dem XML-Format ist vorzugsweise durch ETS-eigene Auslese- bzw. Einlesealgorithmen implementiert. Diese verwirklichen die Konvertierung der Projektierungsdaten aus dem proprietären ETS-Format in das XML-Format und zurück.

Aufgrund der strukturierten Ablage der Projektierungsdaten in der exportierten XML-Datei ist der während des Importierens tätige Einlesealgorithmus der ETS in der Lage, eine Interpretation der Datenstruktur vorzunehmen. Handelt es sich bei dem Applikationsprogramm, in das die Projektierungsdaten übertragen werden, beispielsweise um eine neue Programmversion des gleichen Applikationsprogramms, von dem die Projektierungsdaten ursprünglich stammen, und enthält die neue Programmversion beispielsweise Datenfelder, die in der vorherigen Programmversion noch nicht vorhanden waren, so ist der Einlesealgorithmus aufgrund der verwendeten XML-Struktur in der Lage, die unbesetzten, neuen Datenfelder zu erkennen und beispielsweise mit voreingestellten Standardwerten zu besetzen.

Eine weitere Ausführungsform der Erfindung betrifft die Projektierung von Applikationsprogrammen, für die keine Softwareerweiterung der ETS erforderlich ist. Hier ist erfindungsgemäß eine von dem jeweiligen Applikationsprogramm unabhängige Erweiterung der ETS vorgesehen, welche den Export bzw. Import der Projektierungsdaten durchführt. Um dieser ETS-Erweiterung Informationen zu allen Applikationsprogrammen, deren Projektierung exportiert bzw. importiert werden soll, zur Verfügung zu stellen, sind zusätzliche, in die ETS einbindbare Dateien, beispielsweise im XML-Format oder in Form von DLLs, vorgesehen, welche diese Informationen zur Verfügung stellen. Die entsprechenden Informationen können jedoch auch bereits in der ETS-Erweiterung integriert sein. Sind die Informationen zum Export bzw. Import der Applikationsprogramme direkt in den Datenbankeinträgen der Applikationsprogramme integriert, müssen in der ETS-Erweiterung keine weiteren Informationen zum Export bzw. Import vorgesehen sein.

In einer weiteren Ausführungsform der Erfindung ist die ETS derart ausgebildet, dass die Projektierungsdaten (Parameter) von einem Applikationsprogramm in ein anderes Applikationsprogramm übernommen werden können, ohne dass ein expliziter Export bzw. Import erforderlich ist. Zum einen sind hierzu die in der ETS-Datenbank 16 abgelegten Parameter mit im Applikationsprogramm eindeutigen Bezeichnungen (Parameternamen) und voreingestellten Standardwerten versehen. Zum anderen ist zu den einzelnen Applikationsprogrammen in der ETS-Datenbank 16 hinterlegt, von welchen anderen Applikationsprogrammen eine Parameterübernahme möglich ist.

Anhand der in der ETS-Datenbank 16 hinterlegten Parameternamen erfolgt der in die ETS integrierte Im- und Export der Parameter, indem bei zwei ausgewählten Applikationsprogrammen nach Parametern mit dem gleichen Parameternamen gesucht wird. Bei einer Übereinstimmung wird der Parameterwert des ersten Applikationsprogramms für das zweite Applikationsprogramm übernommen. Wenn in dem zweiten Applikationsprogramm, beispielsweise einer höheren Programmversion, ein entsprechender Parametername nicht gefunden wird, wird ein voreingestellte Standardwert eingetragen. Wenn in dem ersten Applikationsprogramm, beispielsweise einer niedrigeren Programmversion, ein Parametername existiert, der in dem zweiten Applikationsprogramm nicht vorkommt, erfolgt keine Übernahme dieses Parameterwertes.

## Patentansprüche

1. Verfahren zur Projektierung einer busorientierten programmierbaren Elektroinstallation, **gekennzeichnet durch** ein Übernehmen von Projektierungsdaten eines ersten Applikationsprogramms (10) in ein zweites Applikationsprogramm (18).

2. Verfahren nach Anspruch 1, **gekennzeichnet durch** die Schritte:
- Exportieren von Projektierungsdaten des ersten Applikationsprogramms (10),
- Speichern der Projektierungsdaten,
- Importieren der Projektierungsdaten in das zweite Applikationsprogramm (18).

3. Verfahren nach Anspruch 2, **gekennzeichnet durch** den weiteren Schritt:
- Konvertieren der Projektierungsdaten mit proprietärem Format in ein **durch** eine standardisierte Metasprache, insbesondere XML, definiertes Format.

4. Verfahren nach Anspruch 3, **gekennzeichnet durch** den weiteren Schritt:
- Zurückkonvertieren der Projektierungsdaten mit einem **durch** eine standardisierte Metasprache, insbesondere XML, definierten Format in ein proprietäres Format.

5. Verfahren nach einem der Ansprüche 2 bis 4, **gekennzeichnet durch** den weiteren Schritt:
- automatisches Hinzufügen einer das erste Applikationsprogramm (10) und/oder die Projektierungsdaten kennzeichnenden Kennung zu den Projektierungsdaten.

6. Computerprogramm zur Projektierung einer busorientierten programmierbaren Elektroinstallation mit Rechenbefehlen zur Ausführung des Verfahrens nach einem der Ansprüche 1 bis 5, wenn das Programm auf einem Rechner ausgeführt wird.
